(19) Europäisches Patentamt
European Patent Office
Office européen des brevets

(11) **EP 3 130 144 B1**

(12) **FASCICULE DE BREVET EUROPEEN**

(45) Date de publication et mention
de la délivrance du brevet:
**21.10.2020 Bulletin 2020/43**

(21) Numéro de dépôt: **15713963.5**

(22) Date de dépôt: **03.04.2015**

(51) Int Cl.:
*H04N 17/00* $^{(2006.01)}$  *H04N 5/32* $^{(2006.01)}$
*H04N 5/367* $^{(2011.01)}$  *H04N 5/365* $^{(2011.01)}$
*H04N 5/217* $^{(2011.01)}$

(86) Numéro de dépôt international:
**PCT/EP2015/097007**

(87) Numéro de publication internationale:
**WO 2015/155373 (15.10.2015 Gazette 2015/41)**

(54) **PROCÉDÉ DE CALIBRATION D'UN IMAGEUR NUMÉRIQUE**

VERFAHREN ZUR KALIBRIERUNG EINES DIGITALEN BILDAUFNEHMERS

METHOD FOR CALIBRATING A DIGITAL IMAGER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.04.2014 FR 1453252**

(43) Date de publication de la demande:
**15.02.2017 Bulletin 2017/07**

(73) Titulaire: **Trixell**
**38430 Moirans (FR)**

(72) Inventeur: **VIGNOLLE, Jean-Michel**
**38430 Moirans (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2002 031 247    US-A1- 2008 278 607**

• **CHUN JOO PARK ET AL: "Defective pixel map
creation based on wavelet analysis in digital
radiography detectors", NUCLEAR
INSTRUMENTS & METHODS IN PHYSICS
RESEARCH. SECTION A: ACCELERATORS,
SPECTROMETERS, DETECTORS, AND
ASSOCIATED EQUIPMENT, ELSEVIER BV *
NORTH-HOLLAND, NL, vol. 634, no. 1, 10 janvier
2011 (2011-01-10), pages 101-105, XP028146117,
ISSN: 0168-9002, DOI:
10.1016/J.NIMA.2011.01.037 [extrait le
2011-01-20]**

**Description**

L'invention se situe dans le domaine des imageurs numériques. Elle peut être appliquée à tout type d'imageur, notamment les imageurs à rayons X, visibles, infrarouges. L'invention est explicitée ici dans le domaine des imageurs X, ceci à titre d'exemple et sans perte d'applicabilité aux autres domaines d'imagerie.

L'invention concerne un procédé de calibration de la fonction de transfert de l'imageur à divers niveaux . On peut citer par exemple la calibration d'offset, la calibration de gain, la calibration de défauts et d'artéfacts.

Un imageur numérique est un système capable de détecter une image source et de la restituer sous forme d'une matrice de nombres, aussi appelée image de sortie. Cette image de sortie est ensuite présentée sur un écran à un opérateur qui va prendre des décisions ou effectuer des mesures à partir de cette image, ou simplement apprécier la qualité visuelle de l'image dans un usage artistique ou familial.

Dans le cas des imageurs à rayons X, on réalise une image dite image clinique en intercalant un patient entre une source de rayonnement X et l'imageur. On obtient une image de la transmission du patient aux rayons X. L'opérateur est un radiologue ou un manipulateur radio.

Un imageur numérique met en général en œuvre une ou plusieurs des phases suivantes pour générer l'image de sortie : transduction, échantillonnage, numérisation, correction, présentation.

La transduction est la conversion de l'image source en une image dite capturable, c'est-à-dire une image capturable par une électronique: par exemple une image de photons visibles, ou une image de charges électriques. Certains imageurs n'ont pas besoin de transduction car ils peuvent capturer directement l'image source (par exemple une capture d'image visible par un capteur CCD, pour le terme anglo-saxon Charge-Coupled Device, dispositif à transfert de charge en français).

Dans le cas de certains imageurs à rayons X plats, les photons X dont est constituée l'image source sont convertis en lumière visible par un scintillateur.

Cette image électronique est ensuite échantillonnée sous forme d'une matrice. C'est ce que l'on appelle échantillonnage. Cette matrice d'échantillonnage peut exister réellement (cas d'une matrice de pixels de type matrice TFT) ou être créée virtuellement lors du processus de capture de l'information. On peut citer le cas d'un tube électronique qui balaie une surface avec un faisceau électronique de lecture échantillonné à intervalles temporels réguliers.

Dans le cas de certains imageurs à rayons X plats, l'échantillonnage est réalisé par une matrice de pixels photosensibles.

Lors de la numérisation, les informations analogiques sont transformées en informations numériques, délivrées par l'électronique de lecture, et arrangées en une image conforme à la matrice d'échantillonnage. On appelle cette image l'image brute. Elle contient des valeurs sans dimension mais on les considère par convention exprimées en LSB, acronyme du terme anglo-saxon « Least Significant Bit » signifiant bit de poids faible.

L'image brute n'est pas directement proportionnelle à l'image source. Elle doit subir une correction. Elle est donc traitée pour être rendue la plus fidèle possible à l'image source, c'est-à-dire transformée par calcul pour être directement proportionnelle à l'image source. On appelle cette nouvelle image l'image propre ou encore image pré-processée. Les traitements effectués s'appellent correction d'offset, correction de gain, correction de défauts et d'artéfacts. Ces traitements sont détaillés plus loin.

L'image propre est modifiée pour créer une image mieux adaptée aux besoins de l'opérateur, que l'on appelle image post-processée. C'est ce qu'on appelle l'étape de présentation.

Dans le cas des imageurs à rayons X plats pour la radiographie, la présentation consiste à réhausser les contours, compresser la dynamique (échelle logarithmique), et inverser les niveaux (pour ressembler à une radiographie classique sur film argentique). D'autres modalités (fluoroscopie par exemple) appliquent des traitements différents.

L'image brute sera appelée *A*. Si on se réfère à chaque pixel de la matrice, on parle de *Aij*, le suffixe *ij* correspondant au pixel de coordonnée *i* en ligne et *j* en colonne. L'image source est appelée *S*, et avec les mêmes conventions, on parle de *Sij*. D'une manière générale, ces deux images sont liées pixel à pixel par la formule suivante :

$$Aij = Sij \times Gij + OFij \qquad (1)$$

Cette formule est vraie pour tout imageur numérique, au moins dans une certaine plage de valeurs de *Sij,* et pour la plupart des pixels. On appelle cette plage la plage de linéarité de l'imageur. *G* et *OF* sont appelés respectivement le gain et l'offset de l'imageur.

La première étape des traitements de correction est la correction d'offset. Le résultat de la correction d'offset de *A* est une image appelée *A_Oc.* Le calcul réalisé est :

$$A\_Ocij = Aij - OF\_REFij \qquad (2)$$

L'image *OF_REF* est appelée la référence d'offset. Cette image doit être mesurée pour chaque détecteur par l'utilisateur du système d'imagerie numérique, en mettant en œuvre une procédure appelée calibration d'offset. La référence d'offset peut être mesurée initialement en faisant l'acquisition d'images de noir.

Dans le domaine des imageurs à rayons X, une image de noir est réalisée sans exposition aux rayons X. Pour déterminer la référence d'offset, on réalise une image de noir, ou plusieurs images de noir que l'on moyenne afin de minimiser le bruit résiduel dans l'image de référence d'offset. Cette procédure est réalisée soit quelques temps (c'est-à-dire quelques minutes ou quelques heures) avant de mettre en œuvre l'imageur à rayons X en service clinique, soit juste avant ou juste après l'acquisition d'une image clinique. Pendant la mise en œuvre de cette procédure, le détecteur n'est pas disponible pour acquérir des images cliniques.

En injectant l'équation (1) dans l'équation (2), on obtient :

$$A\_Ocij = Sij \times Gij + (OFij - OF\_REFij) \qquad (3)$$

Si la calibration d'offset a été faite correctement, on a :

$$(OFij - OF\_REFij) \sim 0, \qquad (4)$$

avec « ~ » signifiant « approximativement égal à », et donc :

$$A\_Ocij = Sij \times Gij \qquad (5)$$

A cette étape, on a l'image corrigée d'offset *A_Oc.*

L'étape suivante est la correction de gain. Le résultat de la correction de gain de *A_Oc* est une image appelée *A_OcGc.* Le calcul réalisé est :

$$A\_OcGcij = A\_Ocij / G\_REFij \qquad (6)$$

L'image *G_REF* est appelée référence de gain. Cette image doit être mesurée pour chaque détecteur par l'utilisateur du système d'imagerie numérique, en mettant en œuvre une procédure appelée calibration de gain. Pour déterminer l'image de gain, on réalise plusieurs images de blanc corrigées d'offset et on calcule l'image de gain en faisant la moyenne de ces images. Ce moyennage a pour but de minimiser le bruit résiduel dans l'image de gain. Dans le domaine des imageurs à rayons X, on réalise des images de blanc en exposant l'imageur à un rayonnement X sans intercaler ni patient ni objet entre l'imageur et la source de rayonnement. Cette procédure est réalisée quelques temps (minutes, heures, jours ou années) avant de mettre en oeuvre l'imageur à rayons X en service clinique et nécessite de rendre le détecteur non disponible pendant la durée de la calibration.

En injectant l'équation (5) dans l'équation (6), on obtient :

$$A\_OcGcij = Sij \times Gij / G\_REFij \qquad (7)$$

Si la calibration de gain a été effectuée correctement, on a :

$$Gij / G\_REFij \sim k \qquad (8)$$

Avec k constante identique pour tous les pixels de l'image. Et donc :

$$A\_OcGcij = Sij \times k \qquad (9)$$

L'image corrigée d'offset et de gain $A\_OcGc$ est donc fidèle à l'image $S$, c'est-à-dire égale à S, à un facteur $k$ près.

Certains des pixels de l'imageur ne respectent pas la formule (1) et après l'étape (9), ils présentent une valeur non fidèle à S. Lorsque l'écart est trop important, ces pixels sont considérés comme défectueux, et on choisit de remplacer leur valeur par une autre valeur. On appelle ce calcul la correction de défaut. Par exemple, la correction de défaut peut consister à remplacer la valeur du pixel défectueux par la moyenne des 4 ou 8 plus proches voisins non défectueux. La correction de défaut est en général réalisée après correction d'offset et de gain sur l'image $A\_OcGc$ et l'image résultante est appelée $A\_OcGcDc$.

Pour réaliser la correction de défaut, il faut connaitre la liste des pixels défectueux. La procédure visant à déterminer la liste des pixels défectueux est appelée calibration de défauts. On peut par exemple chercher dans les images $OF\_REF$ ou $G\_REF$ les pixels ayant une valeur atypique, et décider que ces pixels sont défectueux. Dans le cas des imageurs à rayons X, cette procédure est réalisée quelques temps (minutes, heures, jours ou années) avant de mettre en œuvre l'imageur à rayons X en service clinique et nécessite de rendre le détecteur non disponible pendant la durée de la calibration.

La liste des défauts peut être stockée dans une image appelée $DM\_REF$ dont les pixels valent 0 lorsqu'ils sont défectueux et 1 sinon.

Certains des pixels de l'imageur ne respectent pas la formule (1) et après l'étape (9), ils présentent une valeur non fidèle à S. Mais l'écart est suffisamment faible pour qu'on ne les considère pas comme défectueux. Ces pixels ou groupes de pixels génèrent cependant une non-fidélité visible sur l'image : on parle alors d'artéfact. Les artéfacts peuvent avoir diverses formes et amplitudes, par exemple un artéfact peut être une ligne un peu plus blanche que les autres. Lorsque ces artéfacts sont connus et ont un comportement suffisamment prédictible et spécifique, il est possible de les éliminer de l'image par calcul, sans dégrader la fidélité à l'image source. On appelle cette opération la correction d'artéfact. Contrairement à la correction de défaut, la correction d'artéfact peut intervenir à n'importe quelle étape de la correction, c'est-à-dire sur l'image $A$ ou $A\_Oc$ ou $A\_OcGc$ ou $A\_OcGcDc$. On choisit l'étape la plus adéquate, compte tenu du processus de création de l'artéfact. Par exemple, un artéfact additif est corrigé sur l'image $A\_Oc$, un artéfact multiplicatif est corrigé sur l'image $A\_OcGc$ ou $A\_OcGcDc$.

Pour corriger les artéfacts, il faut connaitre leur nombre, position, amplitude. Ceci est réalisé dans une procédure appelée calibration des artéfacts. La calibration d'un artéfact consiste souvent à mettre l'imageur dans des conditions spécifiques qui font apparaître l'artéfact, sans autre perturbation, afin d'obtenir une image de référence de l'artefact $A\_REFij$.

Dans le domaine des images X, un exemple d'artéfact est la pixellisation en température pour lequel le brevet FR0707563 a été délivré. Cet artéfact est une dérive locale de gain qui dépend de la température et ne peut donc être capturé dans l'image $G\_REFij$ réalisée à une seule température. Le brevet décrit une méthode de mesure de deux références de gain à deux températures différentes, ce qui permet de calculer un correctif de gain à appliquer dans les zones touchées uniquement, en se basant sur la température fournie par un capteur de température intégré à l'imageur. Ce correctif de gain est différent pour chaque pixel, ce qui amène à le présenter sous forme d'une image de sensibilité à la température $A\_REFij$. Cette procédure est réalisée quelques temps (minutes, heures, jours ou années) avant de mettre en œuvre l'imageur à rayons X en service clinique et nécessite de rendre le détecteur non disponible pendant la durée de la calibration.

Comme on l'a vu précédemment, les corrections nécessitent des calibrations. Ces calibrations consistent à produire des images de référence, $OF\_REF, G\_REF, DM\_REF$ ou $A\_REF$, que l'on appelle de façon générique $C\_REF$ dans la suite. Les procédures de calibration posent plusieurs problèmes.

Elles rendent l'imageur indisponible pendant la durée de la procédure. En effet, les procédures de calibration nécessitent en général de réaliser des images très contrôlées, sans perturbation, ce qui est incompatible avec l'utilisation normale de l'imageur.

Elles peuvent nécessiter l'intervention d'un opérateur spécialisé dans la mise en oeuvre de ces procédures, par exemple parce qu'une procédure est complexe ou nécessite des outils spécifiques (par exemple des mires de calibration). Dans le cas d'un imageur à rayons X, la procédure classique de calibration de gain nécessite de faire des images avec des rayons X, et, dans ce cas, les normes en vigueur imposent la présence d'un opérateur humain.

La calibration n'est parfois pas stable dans le temps et peut nécessiter des re-calibrations plus ou moins fréquentes. La cause de cette instabilité peut être l'évolution, réversible ou non, des matériaux constituant le détecteur, ou des conditions d'environnement extérieures au détecteur (température, humidité, pression). Dans le cas des imageurs à rayons X, l'offset est recalibré le plus souvent possible, parfois même entre chaque image clinique. Les défauts peuvent nécessiter une recalibration aussi fréquente, ou moins fréquente (une fois par an). Le gain peut nécessiter une recalibration de plusieurs fois par jour à une fois par an. Pour les artéfacts, cela est très différent selon le type d'artéfact : la fréquence peut varier de une fois par image à une fois par an.

Ces problèmes imposent des coûts supplémentaires à l'utilisateur : coût d'indisponibilité, coût de l'intervention humaine. Cela peut le conduire dans certains cas à ne pas recalibrer le détecteur aussi souvent que nécessaire, la qualité finale des images produites étant donc dégradée.

Il est donc très utile de disposer d'une procédure de calibration ne disposant pas des inconvénients cités précédemment, c'est-à-dire ayant les fonctionnalités suivantes :

- Ne pas rendre le détecteur indisponible, c'est-à-dire pouvoir fonctionner également avec des images perturbées par l'utilisation normale de l'imageur
- Ne pas nécessiter d'intervention humaine. Dans le cas d'un imageur à rayons X, cela signifie en particulier réaliser la calibration de gain avec des images cliniques.
- Permettre des recalibrations très fréquentes : grâce aux 2 points précédents, le coût des opérations de calibration est diminué et donc des recalibrations aussi fréquentes que nécessaires sont possibles, ce qui garantit au détecteur une qualité d'image maximale durant toute sa durée de vie.

Le document US 2008/278607 décrit un procédé de correction utilisant les statistiques constantes locales pour éliminer le bruit fixe dans une vidéo. Ce procédé ne comporte pas d'étape d'estimation d'une image représentative et peut être considéré comme une alternative au procédé revendiqué.

Le document « Defective pixel map creation based on wavelet analysis in digital radiography detectors », Nuclear instruments & methods in physics research, Elsevier NL, vol. 634, 10 janvier 2011 décrit une méthode d'identification de pixels défectueux dans les détecteurs de radiographie numérique basée sur l'analyse en ondelettes, utilisant une seule paire d'images de noir et de blanc sans exiger qu'elles soient corrigées en gain et en offset.

L'objet de cette invention est un nouveau procédé de calibration qui fournit les avantages ci dessus.

A cet effet, l'invention a pour objet un procédé de calibration d'un imageur numérique selon la revendication 1 et un imageur numérique selon la revendication 11. D'autres aspects de l'invention sont définis selon les revendications dépendantes.

L'invention sera mieux comprise et d'autres avantages apparaîtront à la lecture de la description détaillée d'un mode de réalisation donné à titre d'exemple, description illustrée par le dessin joint dans lequel :

- la figure 1a illustre le schéma d'insertion de l'invention dans une chaîne de corrections pour une étape de correction faisant intervenir l'image de référence C_REF pour passer d'une image A1n à une image A2n,
- la figure 1b représente la mise en œuvre de l'invention pour l'étape de correction présentée sur la figure 1a,
- la figure 2 représente les détails du bloc de mise à jour qui permettent de calculer l'image représentative Cn de l'image de calibration C_REF selon l'invention.

Par souci de clarté, les mêmes éléments porteront les mêmes repères dans les différentes figures.

Le principe du procédé selon l'invention consiste à estimer une image représentative Cn d'une image de calibration C_REF par itérations successives à partir de la valeur courante de l'image de calibration C_REF (et éventuellement des p valeurs précédentes) et de l'image courante AO acquise par le détecteur dans un usage normal (et éventuellement des p images précédentes), ce qui ne nécessite pas d'intervention spéciale. L'itération en cours sera représentée par l'indice « n » dans les descriptions qui vont suivre. Les images courantes seront appelées $A0_n$. Sans perte de généralité, les images d'entrée des itérations successives $A0_1$, $A0_2$, etc. peuvent être immédiatement consécutives ou pas.

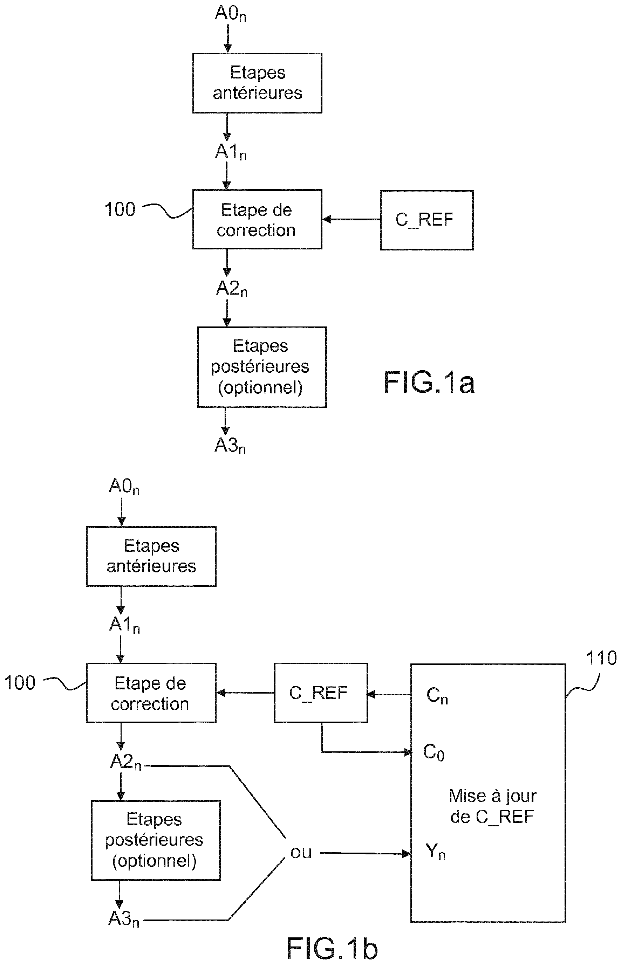

Les figures 1a et 1b présentent le schéma d'insertion de l'invention dans la chaîne de corrections.

La figure 1a présente une étape 100 de correction faisant intervenir l'image de calibration C_REF pour passer de l'image A1n à A2n.

La figure 1b présente la mise en œuvre de l'invention pour cette étape 100. A partir d'une séquence de P images d'entrée An préalablement acquises par l'imageur, auxquelles une image de calibration C_REF est appliquée pour obtenir une séquence de P images de sortie Yn, une calibration est effectuée en faisant une mise à jour (étape 110) de l'image de calibration C_REF par estimation, à une itération n, n étant un nombre entier supérieur ou égal à 1, d'une image représentative Cn de l'image de calibration C_REF.

L'image A2n (ou A3n, issue d'étapes postérieures de correction) est entrée dans un bloc de mise à jour de C_REF, sous le nom générique Yn. Ce bloc va calculer une nouvelle estimation d'une image représentative de l'image de calibration C_REF que l'on appelle Cn. L'image de calibration C_REF courante peut maintenant être remplacée par l'image Cn. Le bloc aura également accès à l'image initiale CO de l'estimation de C_REF, disponible avant la première itération. Cela peut être le résultat d'une calibration classique de C_REF, ou une image vide (c'est-à-dire ne contenant que l'image représentative de l'absence de correctif).

Dans cette description, afin de ne pas alourdir les figures et sans perte de généralité, on ne représente qu'une seule image Yn en entrée du bloc de mise à jour. Mais il va de soi que l'on peut utiliser plusieurs images A2 (ou A3) antérieures en entrée de ce bloc pour réaliser l'estimation, dans ce cas on aurait Yn, Yn-1,...Yn-p en entrée du bloc.

De même, on a représenté une utilisation immédiate de Cn pour remplacer l'image de calibration C_REF, mais il va de soi que l'on pourrait attendre un certain nombre d'étapes de mise à jour avant d'utiliser l'image Cn.

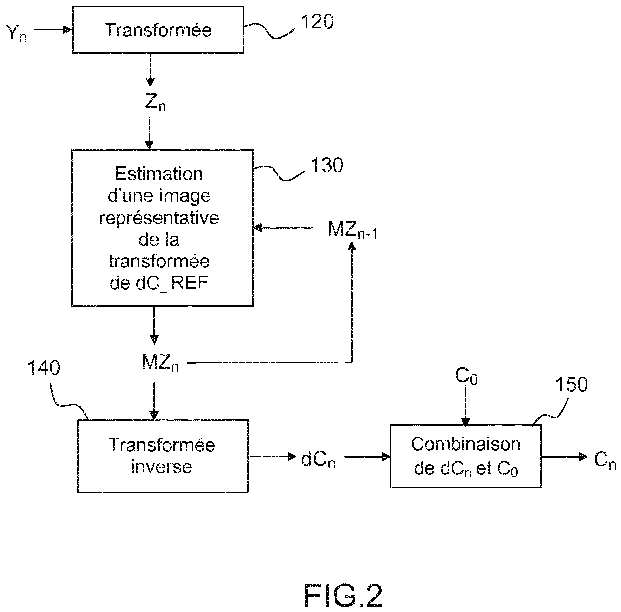

La figure 2 présente les détails du bloc de mise à jour (étape 110) qui permettent de calculer l'image représentative Cn de l'image de calibration C_REF. On définit une image initiale CO représentative de l'image de calibration C_REF. L'estimation de l'image représentative Cn de l'image de calibration C_REF comprend les étapes suivantes :

- Transformée des au moins une P images de sortie Yn, chacune donnant une image Zn de la transformée de l'image de sortie Yn (étape 120),
- Estimation d'une image représentative MZn de la transformée d'une image d'un écart dCn entre l'image initiale CO représentative de l'image de calibration C_REF et l'image de calibration C_REF à partir des images représentatives et des images de la transformée des images de sorties des itérations précédentes (étape 130),
- Transformée inverse de l'image représentative MZn pour obtenir l'image de l'écart dCn (étape 140),
- Combinaison de l'image initiale CO et de l'image de l'écart dCn et obtention de l'image représentative Cn de l'image de calibration C_REF (étape 150).

Autrement dit, l'image Yn est convertie en une image Zn au moyen d'une transformation mathématique qui sera décrite plus loin. L'image dC_REF est une image d'écart entre l'image initiale CO estimée pour C_REF et l'image courante réelle de C_REF. Une image représentative de la transformée de dC_REF est estimée à partir de MZn-1 et Zn, par une méthode qui sera décrite plus loin. L'image MZn est convertie en image dCn au moyen de la transformation mathématique inverse de celle utilisée précédemment. Les images dCn et CO sont combinées en une image Cn, qui est une image représentative de C_REF.

Dans cette description, afin de ne pas alourdir les figures et sans perte de généralité, on ne représente qu'une seule image Zn et MZn-1 en entrée du bloc d'estimation. Il va de soi que l'on pourrait aussi utiliser p images antérieures Zn-1, Zn-2,..., Zn-p ou MZn-1, MZn-2, ..MZn-p pour réaliser cette estimation.

Pour parler du bloc appelé transformée (étape 120) dans la figure 2, on parlera simplement de transformée dans la suite. De même, plutôt que d'écrire image dC_REF, on parlera du correctif. Sans perte de généralité, on donnera ci-après des exemples concrets d'application du procédé uniquement pour l'estimation du correctif de gain. Ce correctif est précisément une estimation représentative de la dérive de la référence de gain. Mais on parlera simplement de correctif pour ne pas alourdir le texte.

L'objectif de la transformée est de séparer le fond clinique du correctif à estimer. La transformée regroupe les valeurs des pixels dans des dimensions nouvelles que l'on appelle des bandes, par généralisation de la terminologie utilisée en analyse fréquentielle. De même, on parle de bandes haute fréquence ou basse fréquence pour définir les bandes qui contiennent plutôt des détails ou plutôt de grandes structures.

On peut classer les corrections en deux types principaux: les corrections additives et les corrections multiplicatives. En général, on utilise pour les corrections additives (comme la correction d'offset), une transformée qui réalise une décomposition additive, c'est-à-dire, en appelant Ci les composantes de l'image C décomposée,

$$C = somme(Ci)$$

Dans ce cas, le fond (c'est-à-dire la valeur typique des images Ci) est égal à zéro en l'absence de signal. On appelle cette valeur la valeur neutre.

Pour les corrections multiplicatives (comme la correction de gain) on utilise une transformée qui décompose l'image en composantes multiplicatives, c'est-à-dire :

$$C = produit(Ci)$$

Dans ce cas, le fond est égal à 1 en l'absence de signal, donc la valeur neutre vaut 1. Mais on peut aussi utiliser l'une ou l'autre ou des combinaisons des deux.

Autrement dit, la transformée réalise une décomposition additive ou multiplicative.

La plupart des transformées usuelles réalisent des décompositions additives. On peut les transformer en décomposition multiplicative par divers procédés de calcul. Un procédé possible est la conversion en échelle logarithmique :

$$LC = log(C)$$

Dans ce cas, l'image LC est décomposée en composantes LCi additives par une transformée classique. La décomposition est donc multiplicative grâce aux propriétés de la fonction exponentielle (notée exp) :

$$C = \exp(LC) = \exp(\text{somme}(LC_i)) = \text{produit}(\exp(LC_i))$$

Les composantes multiplicatives de la décomposition sont les termes exp(LCi).

Autrement dit, la transformée de décomposition multiplicative de l'image est réalisée en appliquant une transformée logarithmique à l'image pour obtenir une image de la transformée logarithmique, puis en appliquant une transformée additive à l'image de la transformée logarithmique.

Un autre procédé possible est la modification directe de la transformation utilisée pour qu'elle réalise une décomposition multiplicative. L'image comprend des hautes fréquences et des basses fréquences. La décomposition multiplicative de l'image est réalisée en séparant les hautes fréquences HF et les basses fréquences BF de l'image à chaque étape de la transformée en divisant l'image par les basses fréquences BF pour obtenir les hautes fréquences HF. Autrement dit, une mise en œuvre possible est, lors du calcul de la décomposition en 2 bandes, une bande basse fréquence (BF) et une bande haute fréquence (HF), de calculer la bande HF de la façon suivante :

$$HF = C / BF$$

Ce qui impose une reconstruction multiplicative :

$$C = HF \times BF = C1 \times C0$$

En procédant ainsi à toutes les étapes de la décomposition, on obtient une décomposition multiplicative :

$$C = \text{produit}(C_i)$$

De manière générale, la transformée peut être un filtrage passe-haut, une transformée en ondelettes, une transformée de Fourier ou une transformée en curvelets, ou une combinaison de ces transformées, ou même toute autre transformée ayant des propriétés permettant de séparer le fond clinique du correctif que l'on souhaite estimer.

L'invention pourrait aussi être appliquée avec une transformée dite transformée identité, c'est-à-dire sans transformée. L'inconvénient de la transformée identité est de très mal séparer la partie « fond clinique » de la partie « correctif ». Si la méthode utilisée pour estimer une image représentative du correctif est la moyenne, même en moyennant un très grand nombre d'images p, le bruit résiduel est très grand dans l'image de correctif, trop grand pour que celui-ci soit utilisable. En effet, dans un hôpital qui ne fait, par exemple, que des images pulmonaires, toutes les radiographies sont sombres au centre, derrière le buste du patient, et très claires en périphérie, là où les rayons X arrivent sans atténuation. Moyenner un grand nombre d'images crée un correctif relativement uniforme mais représentant l'image d'un buste de « patient moyen », ce qui n'est pas du tout l'effet désiré. La procédure doit capturer les évolutions attribuables à la dérive de la référence de gain et pas le fond clinique, ou du moins à un niveau inférieur à un seuil de visibilité. Le seuil de visibilité se situe typiquement entre 1% et 0.1%.

Pour que le procédé ne capture pas de fond clinique, il faut appliquer une transformation qui va faire en sorte, par construction, que le fond clinique soit typiquement égal à la valeur en l'absence de fond clinique. Pour ce faire, on peut utiliser une transformée qui réalise un filtrage « passe-haut », par exemple, dans le cas d'une décomposition multiplicative, en divisant l'image par une copie d'elle-même filtrée au préalable par un filtrage gaussien d'une centaine de pixels. Un tel filtrage va bien éliminer le fond clinique basse fréquence, la partie restante du fond clinique est aléatoirement supérieure ou inférieure à 1 sur un pixel donné, et la moyenne est égale à 1. Cependant, cette transformation va également éliminer la partie basse fréquence des défauts. Le correctif est donc incomplet, car le filtrage réalisé n'est pas inversible. Ainsi, des défauts de forte amplitude (par exemple de correctif 1.2) et de grande taille dans une direction seulement (un groupe de 50 colonnes par exemple) voient une partie importante de leur signal éliminée et donc non corrigée.

Pour remédier à ces inconvénients, il faut utiliser des transformées qui non seulement ramènent le fond clinique à une moyenne égale à 1, mais préservent le défaut, voire amplifient leur rapport signal sur bruit, ce qui rend leur estimation plus fiable. On peut, par exemple, utiliser une transformée en ondelettes. Ce type de transformation détecte particulièrement bien les structures avec des bords horizontaux ou verticaux. Les défauts de calibration sont souvent conformes à ce type de structures (mais pas toujours), ils sont donc bien capturés. Le fond clinique n'est, en général, pas aligné exactement sur des horizontales et des verticales, il est donc mieux séparé des défauts. Les transformées en ondelettes ont également l'avantage d'être très peu coûteuses en calculs, ce qui est important pour implémenter l'invention dans un système d'électronique embarquée. On peut par exemple utiliser des filtres d'ondelettes parmi les suivants : Haar, Daubechies(n) avec n = 2 à 20, Symlet(n) avec n = 4 à 20, Coiflets(n) avec n = 6, 12, 18, 24 ou 30, Battle-lemarie(n) avec n = 0 à 6, Bspline(m,n) avec (m,n) = (1,1) à (1,5), ou (2,2) à (2,8) ou (3,1) à (3,9). On peut également utiliser une transformée en ondelette non décimée, ou décimée de façon dyadique, ou une combinaison des deux. La combinaison des deux peut consister par exemple en la non-décimation des hautes fréquences et la décimation des basses fréquences, ceci à chaque étape de la transformation.

On peut également utiliser une transformée en curvelets, qui a la particularité d'être optimale pour estimer des défauts approximables par un développement limité au deuxième ordre (convergence très rapide) avec peu de coefficients. La transformée en curvelets capture bien les défauts dans toutes les directions (elles ne sont pas centrées sur les horizontales et verticales). De plus, ce type de transformée s'approche mieux du fonctionnement de l'œil humain tel qu'on le comprend aujourd'hui : les défauts plus visibles à l'œil sont donc mieux capturés dans le correctif. Son inconvénient est de faire intervenir la transformée de Fourier, des nombres complexes, une redondance d'environ x7 (la transformée comporte environ 7 fois plus de points que l'image initiale, ces points étant des nombres complexes), et son coût en calculs est élevé : il faut environ 4 transformées de Fourier rapides pour une transformation aller-retour.

Il existe de nombreuses autres transformations spatiales inversibles ou non. On peut utiliser n'importe quelle transformation ou combinaison ou variante de transformations (par exemple, on peut choisir une transformation lissée ou non lissée, ou bien une transformation décimée ou non décimée, etc) ainsi que des filtres associés (comme par exemple un filtre passe-haut), du moment qu'elle isole au moins partiellement le fond clinique des défauts et permette que, sur certains des atomes de la transformée, la moyenne d'un grand nombre des valeurs prises par la transformée est la valeur neutre (1 pour une décomposition multiplicative, 0 pour une décomposition additive) s'il n'y a que du fond clinique, et vaut la transformée du défaut dans le cas contraire.

La figure 2 indique l'utilisation d'un bloc d'estimation d'une image représentative de la transformée de dC_REF.

Cette estimation étant itérative, les images cliniques utilisées peuvent être ou ne pas être successives. Par exemple, on peut sauter une image sur n, avec n = 2, 3 ou plus, ou bien prendre des images à heure fixe, par exemple la première image réalisée au bout de 10 ou 30 minutes. On peut également relancer le calcul pour chaque jeu de P images, ou bien à chaque nouvelle image dans la série (la nouvelle série aura donc P-1 images en commun avec la précédente). On peut également imaginer une configuration où l'imageur est autorisé à ne pas faire une ou plusieurs mises à jour si cela est incompatible avec le besoin de l'utilisateur. On peut par exemple rencontrer un tel cas de figure quand l'imageur n'est pas disponible car de nouvelles images sont demandées. Dans ce cas, on peut soit interrompre le calcul de mise à jour et le mettre en pause pour le terminer plus tard, soit abandonner ce calcul et en recommencer un à partir d'une image ultérieure, lorsque le calculateur sera de nouveau disponible (examen du patient terminé, par exemple).

L'image représentative $MZ_n$ de la transformée de l'image de l'écart $dC_n$ entre CO et C_REF peut être estimée de diverses façons, à savoir au moyen d'une moyenne, d'une moyenne naïve, d'une moyenne glissante dans le temps, d'un médian, d'un médian itératif, ou bien faire une estimation conjointe itérative du médian et de l'écart (aussi appelé mu-sigma itératif).

La moyenne naïve consiste à calculer pour chaque pixel la moyenne des i dernières valeurs, en excluant du calcul les valeurs marquées. Cette méthode présente de nombreux inconvénients : elle est coûteuse en mémoire, en calcul et peu robuste au fond clinique.

La moyenne glissante consiste à estimer la moyenne à partir de l'estimation faite à l'étape (n-1), $MZ_{n-1}$, et de l'image courante $Z_n$, par la formule suivante :

$$MZ_n = MZ_{n-1} \times (1-a) + Z_n \times a.$$

Le coefficient a prend une valeur comprise entre 0 et 1, par exemple a = 0.001. Cette formule a l'avantage de ne nécessiter qu'une image en mémoire, l'image $MZ_{n-1}$, au lieu des i dernières images, et une seule addition pour calculer la moyenne. Si a = 0.01, cela est approximativement équivalent à moyenner 100 images. Cette technique évite donc de garder en mémoire les 100 dernières images et de faire 100 additions. De plus, elle donne un poids plus important aux images les plus récentes. En effet, l'image (n-p) est pondérée approximativement par $a \times ((1-a)^p)$ et $(1-a)^p$ tend rapidement vers 0, ce qui est souhaité si le défaut évolue au cours de l'estimation. Cette technique améliore la mémoire et la puissance de calcul nécessaire, mais pas la robustesse au fond clinique. En effet, on cherche à estimer un défaut qui vaut typiquement entre 10% et 0.1%, et les perturbations locales apportées par le fond clinique peuvent être très élevées, par exemple 100%. Si une perturbation clinique de 100% se présente, et que l'on utilise un coefficient a = 0.01, le correctif inclut une perturbation égale à 100% x 0.01 = 1%, un niveau beaucoup trop élevé pour être acceptable. De plus, cette perturbation est visible pendant un nombre d'images proportionnel à 1/a, c'est-à-dire 100 images. Ce qui est long. On peut diminuer cet effet en diminuant la valeur de a, par exemple a = 0.001. Dans ce cas, le résidu clinique vaudra 0.1%, ce qui peut être acceptable visuellement, mais il faut environ 2/a images soit 2000 images pour estimer le défaut, ce qui est long.

Il existe de nombreuses techniques pour estimer une image représentative en présence de perturbations, on parle alors d'estimateur robuste de la moyenne. Le plus populaire de ces estimateurs robustes est le médian. On peut effectivement en chaque pixel calculer le médian des i dernières images $Zn$. Cependant, cela nécessite de garder en mémoire les i dernières images et le calcul du médian est lui-même une opération coûteuse en temps de calcul. En effet, il nécessite de trier par ordre croissant les i valeurs en chaque pixel, pour déterminer celle qui est au milieu.

Pour limiter le coût en mémoire et calcul, on peut utiliser un médian itératif. Il s'agit de comparer $MZ_{n-1}$ et $Z_n$, $MZ_{n-1}$ étant l'estimation de l'image Z pour la (n-1)-ième itération :

Si Zn > MZ(n-1) alors MZn = Mz(n-1) + a
Si Zn < MZ(n-1) alors MZn = Mz(n-1) - a

La valeur de a est choisie suffisamment faible pour que l'évolution entre deux images soit négligeable, par exemple 0.01%. Cet estimateur converge vers le médian et ne nécessite pas plus d'images en mémoire que la moyenne glissante. De plus, une perturbation de 100% par le fond clinique ne génère qu'une erreur de a, soit 0.01%. Avec cette technique, la vitesse de convergence et le bruit résiduel sont bien maîtrisés par l'ajustement du facteur a. Dans cet exemple, il faudra au moins 200 images pour corriger un défaut d'amplitude 2%, et 1000 images pour un défaut de 10%. Le bruit résiduel sera en pratique limité à environ 5 fois a, 0.05% dans ce cas. L'inconvénient de cette méthode est que pour limiter le bruit à un niveau faible (moins de 1%), on doit avoir une valeur de a faible et que un défaut fort qui apparaît brusquement est corrigé lentement : 1000 images si le défaut vaut 10%.

Afin de remédier à ces inconvénients, on peut utiliser une technique d'estimation conjointe itérative du médian et de l'écart-type, aussi appelée mu-sigma itératif. Pour cela, on estime, en plus de la moyenne MZ, l'écart type robuste SZ de la façon suivante :

$$\text{Si Zn} > MZ_{n-1} \text{ alors } MZ_n = MZ_{n-1} + a. \quad (11)$$

$$\text{Si Zn} < MZ_{n-1} \text{ alors } MZ_n = MZ_{n-1} - a. \quad (12)$$

$$\text{Si } |\text{Zn-MZn}| > Sz(n-1) \text{ alors } Szn = Sz(n-1) \times b. \quad (13)$$

$$\text{Si } |\text{Zn-MZn}| < Sz(n-1) \text{ alors } Szn = Sz(n-1) / b. \quad (14)$$

Enfin, a = k x Sz(n-1) avec k entre 1 et 0.01, par exemple k = 0.2 |x| représente la valeur absolue de x.
Une variante possible de (11)-(12) est :

Si Zn > $MZ_{n-1}$ alors MZn = $MZ_{n-1}$ x a,
Si Zn < $MZ_{n-1}$ alors MZn = $MZ_{n-1}$ / a,

avec a = 1 + k x Sz(n-1)/ MZ(n-1).
La valeur de b est fixée selon la vitesse d'ajustement choisie, en général entre 1 et 2, par exemple b = 1.2. Cela permet à l'écart type de s'ajuster beaucoup plus rapidement que la moyenne. On fixe des valeurs minimum et maximum, Smax et Smin, pour éviter que le résultat diverge, par exemple Smax = 10% et Smin = 0.001%. Au départ, la valeur de S est fixée à S0, par exemple 0.5%. Cette procédure permet d'avoir rapidement l'ordre de grandeur de l'erreur pour chaque pixel. S'il n'y a pas de défaut sur un pixel, l'erreur sera inférieure à la valeur de départ et la valeur de Sz va rapidement converger vers le bruit d'X moyen de l'image. S'il y a un défaut visible, c'est-à-dire d'amplitude forte, Sz va rapidement converger vers la valeur de cet écart.
Comme la valeur de a est ajustée à chaque image en fonction de Sz, la correction appliquée s'adapte automatiquement au besoin : si un défaut est présent, le correctif vaut une fraction de ce défaut qui est corrigé rapidement, en quelques itérations. Le défaut ayant disparu, la valeur de l'écart va baisser rapidement au niveau du bruit d'X de l'image et la valeur de a est donc bien en dessous du seuil de perception. Cette procédure a l'avantage de fournir une auto-adaptation stable du correctif à appliquer au cours du temps : quand l'erreur est forte et systématique, celle-ci est corrigée rapidement. Quand il n'y a pas d'erreur, le correctif n'évolue pas de façon perceptible. Le prix à payer pour mettre en œuvre cette solution est de conserver deux transformées en mémoire : MZ et Sz, et de rajouter quelques calculs supplémentaires.

Ceci décrit les diverses méthodes utilisables pour obtenir à l'itération n une estimation de MZn, l'image représentative du correctif à l'itération n.

Le calcul de la nouvelle estimation de l'image représentative Cn de l'image de calibration C_REF est obtenu par transformée inverse de l'image représentative MZn de l'écart, qui donne l'image de correctif dCn, puis par combinaison de dCn et CO.

La méthode utilisée pour combiner dCn et CO dépend des choix d'implémentation pour l'estimation du correctif. Par exemple :

- Combinaison additive: C_REF = CO + dCn
- Combinaison multiplicative : C_REF = CO x dCn

Autrement dit, la combinaison de l'image initiale CO et de l'image dCn est une combinaison additive ou multiplicative.

## Revendications

1. Procédé de calibration d'un imageur numérique à partir d'une séquence de P images d'entrée (An) préalablement acquises par l'imageur, composées d'un contenu de l'image et d'un défaut de non-uniformité, auxquelles une image de calibration (C_REF) est appliquée pour obtenir une séquence de P images de sortie (Yn, ..., Yn-p), **caractérisé en ce que** la calibration est effectuée en faisant une mise à jour de l'image de calibration (C_REF) par estimation, à une itération n, n étant un nombre entier supérieur ou égal à 1, d'une image représentative (Cn) de l'image de calibration (C_REF), où ladite image représentative (Cn) est un correctif dudit défaut de non-uniformité, **en ce que** l'on définit une image initiale (CO) représentative de l'image de calibration (C_REF),
   **en ce que** l'on choisit une première transformation mathématique, ayant des propriétés destinées à séparer le contenu de l'image dudit défaut de non-uniformité, qui peut transformer une image de sortie (Yn) en une image (Zn) appelée transformée de l'image de sortie (Yn), et pour laquelle il existe une seconde transformation mathématique, appelée transformation inverse, capable de transformer la transformée de l'image de sortie (Zn) en l'image (Yn) appelée transformée inverse (Zn) de la transformée de l'image de sortie (Yn),
   et **en ce que** l'estimation de l'image représentative (Cn) de l'image de calibration (C_REF) comprend les étapes suivantes:

   • Transformation (120) d' au moins une des images de sortie (Yn) donnant une image (Zn) de la transformée de l'image de sortie (Yn)
   • Estimation (130) d'une image représentative (MZn) de la transformée d'une image d'un écart (dCn) entre l'image initiale (CO) représentative de l'image de calibration (C_REF) et l'image de calibration (C_REF) à partir au moins de l' image représentative (MZn-1) de l'itération précédente et de l' image (Zn) de la transformée de l'image de sortie la plus récente (Yn) dans la séquence des P images (Yn,...,Yn-p)
   • Transformation inverse (140), correspondant à la seconde transformation mathématique, de l'image représentative (MZn) pour obtenir l'image de l'écart (dCn)
   • Combinaison (150) de l'image initiale (CO) et de l'image de l'écart (dCn) et obtention de l'image représentative (Cn) de l'image de calibration (C_REF).

2. Procédé de calibration selon la revendication 1, **caractérisé en ce que** la transformée réalise une décomposition additive ou multiplicative d'une image.

3. Procédé de calibration selon la revendication 2, la transformée réalisant une décomposition multiplicative d'une image, **caractérisé en ce que** la transformée de décomposition multiplicative de l'image est réalisée en appliquant une transformée logarithmique à l'image pour obtenir une image de la transformée logarithmique, puis en appliquant une transformée additive à l'image de la transformée logarithmique.

4. Procédé de calibration selon la revendication 2, la transformée réalisant une décomposition multiplicative d'une image, l'image comprenant des hautes fréquences et des basses fréquences, **caractérisé en ce que** la décomposition multiplicative de l'image est réalisée en séparant les hautes fréquences HF et les basses fréquences BF de l'image à chaque étape de la transformée en divisant l'image par les basses fréquences BF pour obtenir les hautes fréquences HF.

5. Procédé de calibration selon une ou plusieurs des revendications 1 à 4, **caractérisé en ce que** la transformée est une transformation identité, un filtrage passe-haut, une transformée en ondelettes ou une transformée en curvelets ou une combinaison de ces transformées.

6. Procédé de calibration selon une ou plusieurs des revendications 1 à 5, **caractérisé en ce que** l'image représentative (MZn) de la transformée de l'image de l'écart (dCn) est estimée au moyen d'une moyenne, d'une moyenne glissante dans le temps, d'un médian, d'un médian itératif, ou d'une estimation mu-sigma itératif.

7. Procédé de calibration selon l'une des revendications précédentes, **caractérisé en ce que** l'image représentative (MZn) de la transformée de l'image de l'écart (dCn) est estimée au moyen d'une estimation mu-sigma itératif, **en ce qu'**un écart-type (Szn) est estimé et **en ce que** l'estimation de l'image représentative (MZn) de la transformée de l'image de l'écart (dCn) se fait à partir de l'image représentative (MZn-1) de la transformée de l'image de l'écart et de l'estimation de l'écart-type (Szn-1) de l'itération précédente.

8. Procédé de calibration selon une ou plusieurs des revendications 1 à 7, **caractérisé en ce que** la combinaison de l'image initiale CO et de l'image dCn est une combinaison additive ou multiplicative.

9. Procédé de calibration selon une ou plusieurs des revendications 1 à 8, **caractérisé en ce que** l'image représentative Cn de l'image de calibration C_REF est un correctif d'offset, un correctif de gain, un correctif d'artéfact ou une cartographie des défauts.

10. Procédé de calibration selon une ou plusieurs des revendications 1 à 9, **caractérisé en ce qu'**il est mis en œuvre dans le domaine d'application des imageurs à rayons X.

11. Imageur numérique **caractérisé en ce qu'**il est configuré pour mettre en œuvre un procédé de calibration selon l'une des revendications 1 à 10.

## Patentansprüche

1. Verfahren zum Kalibrieren eines digitalen Bildgebers auf der Basis einer Folge von P Eingangsbildern (An), die zuvor von dem Bildgeber erfasst wurden und aus einem Inhalt des Bildes und einem Uneinheitlichkeitsfehler bestehen, auf die ein Kalibrationsbild (C_REF) angewendet wird, um eine Folge von P Ausgangsbildern (Yn, ..., Yn-p) zu erhalten,
**dadurch gekennzeichnet, dass** die Kalibrierung bei Aktualisierung des Kalibrationsbildes (C_REF) durch Schätzen, mit einer Iteration n, wobei n eine ganze Zahl gleich oder größer als 1 ist, eines Bildes (Cn) durchgeführt wird, das für das Kalibrationsbild (C_REF) repräsentativ ist, wobei das repräsentative Bild (Cn) eine Korrektur des Uneinheitlichkeitfehlers ist,
dadurch, dass ein Anfangsbild (C0) definiert wird, das für das Kalibrationsbild (C_REF) repräsentativ ist,
dadurch, dass eine erste mathematische Transformation mit Eigenschaften gewählt wird, die zum Trennen des Inhalts des Bildes von dem Uneinheitlichkeitsfehler bestimmt ist, die ein Ausgangsbild (Yn) in ein so genanntes transformiertes Bild (Zn) des Ausgangsbildes (Yn) umwandeln kann, und für das es eine zweite mathematische Transformation gibt, inverse Transformation genannt, die die Transformation des Ausgangsbildes (Zn) in das inverse Transformation (Zn) genannte Bild (Yn) der Transformation des Ausgabebildes (Yn) umwandeln kann,
und dadurch, dass das Schätzen des für das Kalibrationsbild (C_REF) repräsentativen Bildes (Cn) die folgenden Schritte beinhaltet:

• Transformieren (120) mindestens eines der P Ausgangsbilder (Yn), das ein Bild (Zn) der Transformation des Ausgangsbildes (Yn) ergibt,
• Schätzen (130) eines repräsentativen Bildes (MZn) der Transformation eines Bildes einer Abweichung (dCn) zwischen dem für das Kalibrationsbild (C_REF) repräsentativen Anfangsbild (C0) und dem Kalibrationsbild (C_REF) mindestens auf der Basis des repräsentativen Bild (MZn-1) der vorherigen Iteration und des Bildes (Zn) der Transformation des jüngsten Ausgangsbildes (Yn) in der Folge von P Bildern (Yn, ..., Yn-p);
• inverses Transformieren (140), entsprechend der zweiten mathematischen Transformation, des repräsentativen Bildes (MZn), um das Bild der Abweichung (dCn) zu erhalten;

• Kombinieren (150) des Anfangsbildes (C0) und des Bildes der Abweichung (dCn) und Erhalten des für das Kalibrationsbild (C_REF) repräsentativen Bildes (Cn).

**2.** Kalibrierungsverfahren nach Anspruch 1, **dadurch gekennzeichnet, dass** die Transformation eine additive oder multiplikative Zerlegung eines Bildes durchführt.

**3.** Kalibrierungsverfahren nach Anspruch 2, wobei die Transformation eine multiplikative Zerlegung eines Bildes durchführt, **dadurch gekennzeichnet, dass** die multiplikative Zerlegungstransformation des Bildes durchgeführt wird, indem eine logarithmische Transformation auf das Bild angewendet wird, um ein Bild der logarithmischen Transformation zu erhalten, und dann eine additive Transformation auf das Bild der logarithmischen Transformation angewendet wird.

**4.** Kalibrierungsverfahren nach Anspruch 2, wobei die Transformation eine multiplikative Zerlegung eines Bildes durchführt, wobei das Bild hohe Frequenzen und niedrige Frequenzen umfasst, **dadurch gekennzeichnet, dass** die multiplikative Zerlegung des Bildes durch Trennen der hohen HF-Frequenzen und der niedrigen NF-Frequenzen des Bildes bei jedem Schritt der Transformation durchgeführt wird, indem das Bild durch die niedrigen NF-Frequenzen geteilt wird, um die hohen HF-Frequenzen zu erhalten.

**5.** Kalibrierungsverfahren nach einem oder mehreren der Ansprüche 1 bis 4, **dadurch gekennzeichnet, dass** die Transformation eine Identitätstransformation, eine Hochpassfilterung, eine Wavelet-Transformation oder eine Curvelet-Transformation oder eine Kombination dieser Transformationen ist.

**6.** Kalibrierungsverfahren nach einem oder mehreren der Ansprüche 1 bis 5, **dadurch gekennzeichnet, dass** das repräsentative Bild (MZn) der Transformation des Bildes der Abweichung (dCn) mit Hilfe eines Mittelwertes, eines gleitenden Mittelwertes in der Zeit, eines Medians, eines iterativen Medians oder einer iterativen Mu-Sigma-Schätzung geschätzt wird.

**7.** Kalibrierungsverfahren nach einem der vorherigen Ansprüche, **dadurch gekennzeichnet, dass** das repräsentative Bild (MZn) der Transformation des Bildes der Abweichung (dCn) mit Hilfe einer iterativen Mu-Sigma-Schätzung geschätzt wird, dadurch, dass eine Standardabweichung (Szn) geschätzt wird, und dadurch, dass die Schätzung des repräsentativen Bildes (MZn) der Transformation des Bildes der Abweichung (dCn) auf der Basis des repräsentativen Bildes (MZn-1) der Transformation des Bildes der Abweichung und der Schätzung der Standardabweichung (Szn-1) der vorherigen Iteration erfolgt.

**8.** Kalibrierungsverfahren nach einem oder mehreren der Ansprüche 1 bis 7, **dadurch gekennzeichnet, dass** die Kombination des Ausgangsbildes C0 und des Bildes dCn eine additive oder multiplikative Kombination ist.

**9.** Kalibrierungsverfahren nach einem oder mehreren der Ansprüche 1 bis 8, **dadurch gekennzeichnet, dass** das repräsentative Bild Cn des Kalibrationsbildes C_REF eine Offsetkorrektur, eine Verstärkungskorrektur, eine Artefaktkorrektur oder eine Fehlerkartografie ist.

**10.** Kalibrierungsverfahren nach einem oder mehreren der Ansprüche 1 bis 9, **dadurch gekennzeichnet, dass** es im Anwendungsbereich von Röntgenbildgebern verwendet wird.

**11.** Digitaler Bildgeber, **dadurch gekennzeichnet, dass** er so konfiguriert ist, dass er ein Kalibrierungsverfahren nach einem der Ansprüche 1 bis 10 durchführt.

## Claims

**1.** A method for calibrating a digital imager using a sequence of P input images (An) acquired beforehand by the imager, consisting of an image content and a non-uniformity defect, to which images a calibrating image (C_REF) is applied to obtain a sequence of P output images (Yn, ..., Yn-p),
**characterized in that** the calibration is carried out by updating the calibrating image (C_REF) by estimating, in an iteration n, n being an integer higher than or equal to 1, an image (Cn) representative of the calibrating image (C_REF), wherein said representative image (Cn) is a patch of said non-uniformity defect,
**in that** an initial image (C0) representative of the calibrating image (C_REF) is defined,
**in that** a first mathematical transformation is chosen, having properties designed to separate the image content from said non-uniformity defect that is able to transform an output image (Yn) into an image (Zn), which is called the transform of the output image (Yn), and for which there is a second mathematical transformation, called inverse transformation, capable of transforming the transform of the output image (Zn) into the image (Yn), which is called the inverse transform (Zn) of the transform of the output image (Yn),

and **in that** the estimation of the image (Cn) representative of the calibrating image (C_REF) comprises the following steps:

- transforming (120) at least one of the P output images (Yn), giving an image (Zn) of the transform of the output image (Yn);
- estimating (130) an image (MZn) representative of the transform of an image of a deviation (dCn) between the initial image (C0) representative of the calibrating image (C_REF) and the calibrating image (C_REF) from at least the representative image (MZn-1) of the preceding iteration and the image (Zn) of the transform of the most recent output image (Yn) in the sequence of the P images (Yn, ..., Yn-p)
- inversely transforming (140), according to the second mathematical transformation, the representative image (MZn) to obtain the image of the deviation (dCn);
- combining (150) the initial image (C0) and the image of the deviation (dCn) and obtaining the image (Cn) representative of the calibrating image (C_REF).

2. The calibrating method according to claim 1, **characterized in that** the transform performs an additive or multiplicative decomposition of an image.

3. The calibrating method according to claim 2, the transform performing a multiplicative decomposition of an image, **characterized in that** the multiplicative decomposition transform of the image is performed by applying a logarithmic transform to the image to obtain an image of the logarithmic transform, then by applying an additive transform to the image of the logarithmic transform.

4. The calibrating method according to claim 2, the transform performing a multiplicative decomposition of an image, the image comprising high frequencies and low frequencies, **characterized in that** the multiplicative decomposition of the image is performed by separating the high frequencies HF and the low frequencies LF of the image in each step of the transform by dividing the image by the low frequencies LF to obtain the high frequencies HF.

5. The calibrating method according to one or more of claims 1 to 4, **characterized in that** the transform is an identity transformation, a high-pass filter, a wavelet transform or a curvelet transform or a combination of these transforms.

6. The calibrating method according to one or more of claims 1 to 5, **characterized in that** the image (MZn) representative of the transform of the image of the deviation (dCn) is estimated by means of a mean value, a time moving mean value, a median, an iterative median, or an iterative mu-sigma estimation.

7. The calibrating method according to one of the preceding claims, **characterized in that** the image (MZn) representative of the transform of the image of the deviation (dCn) is estimated by means of an iterative mu-sigma estimation, **in that** a standard deviation (Szn) is estimated and **in that** the image (MZn) representative of the transform of the image of the deviation (dCn) is estimated from the image (MZn-1) representative of the transform of the image of the deviation and estimation of the standard deviation (Szn-1) of the preceding iteration.

8. The calibrating method according to one or more of claims 1 to 7, **characterized in that** the combination of the initial image C0 and the image dCn is an additive or multiplicative combination.

9. The calibrating method according to one or more of claims 1 to 8, **characterized in that** the image Cn representative of the calibrating image C_REF is an offset correction, a gain correction, an artefact correction or a defect map.

10. The calibrating method according to one or more of claims 1 to 9, **characterized in that** it is implemented in the field of application of x-ray imagers.

11. A digital imager **characterized in that** it is configured to implement a calibrating method according to one of claims 1 to 10.

$A0_n$

Etapes
antérieures

$A1_n$

100

Etape de
correction ◄─── C_REF

$A2_n$

Etapes
postérieures
(optionnel)

$A3_n$

FIG.1a

$A0_n$

Etapes
antérieures

$A1_n$

100

Etape de
correction ◄─── C_REF ◄─── $C_n$                110

$C_0$

Mise à jour
de C_REF

$A2_n$

Etapes
postérieures
(optionnel)

ou ───► $Y_n$

$A3_n$

FIG.1b

$Y_n \longrightarrow$ | Transformée | $\sim$ 120

$\downarrow$

$Z_n$

$\downarrow$

Estimation d'une image représentative de la transformée de dC_REF | $\sim$ 130 $\longleftarrow MZ_{n-1}$

$\downarrow$

140

$MZ_n$

Transformée inverse $\longrightarrow dC_n \longrightarrow$ | $C_0$ $\downarrow$ 150 |

Combinaison de dC_n et C_0 $\longrightarrow C_n$

FIG.2

## RÉFÉRENCES CITÉES DANS LA DESCRIPTION

**Documents brevets cités dans la description**

- FR 0707563 A

- US 2008278607 A

**Littérature non-brevet citée dans la description**

- Defective pixel map creation based on wavelet analysis in digital radiography detectors. Nuclear instruments & methods in physics research. Elsevier, 10 Janvier 2011, vol. 634